# EUROPEAN PATENT SPECIFICATION

(11) **EP 2 780 131 B1**
(45) Date of publication and mention of the grant of the patent: **03.02.2016**
(21) Application number: 12808483.7
(22) Date of filing: 08.11.2012
(51) Int. Cl.: B23K 37/04, B23K 37/02

(54) **PROCESS OF LASER WELDING WITH A CALIBRATION UNIT WITH REFRACTION MEANS**
VERFAHREN ZUM LASERSCHWEISSEN MIT EINER REFRAKTIERELEMENTE AUFWEISENDEN KALIBRATIONSEINHEIT
PROCÉDÉ POUR SOUDER AU LASER AVEC UNE UNITÉ DE CALIBRATION AVEC DES ÉLÉMENTS RÉFRACTANTS

(30) Priority: 16.11.2011 EP 11189281; 21.02.2012 EP 12156294
(43) Date of publication of application: 24.09.2014
(73) Proprietor: Optec S.p.A., 28100 Novara (NO) (IT)
(72) Inventor: CILIA, Matteo, I-28100 Novara (NO) (IT); BOSOTTI, Tiberio, I-20027 Rescaldina (MI) (IT)
(74) Representative: Lunati & Mazzoni S.r.L.
(86) International application number: PCT/IB2012/056250
(87) International publication number: WO 2013/072817

(56) References cited:
- JP-A- 2000 197 982
- JP-A- 2008 221 314
- US-A1- 2005 100 703
- US-A1- 2006 255 019

## Description

The present invention relates to a device and a process for laser welding, of the type pointed out in the preamble of the independent claim 1.

A corresponding device is described in patent application US-A-2006l255019.

It is known that presently laser welding is increasingly more frequently used because it is more practical and quicker to be carried out as compared with the other known welding techniques. This preference for laser welding is due not only to the high speed and automation degree, but also to the better quality of the weld bead, due to the absence of thermally altered regions and residual stresses at said bead.

Known devices for laser welding substantially consist of a gas laser source (He, Ar, CO₂, for example), or a solid means (ruby, NdYAG, for example) implementing the laser beam; and an optical system which concentrates the laser beam at the beam axis and directs it to the welding region.

In detail, the laser beam, due to the optical system, is focused on the welding region in such a manner that it strikes on that region with a limited incidence section, referred to as spot, causing fusion of same. In greater detail, when the beam hits the welding region, it vaporises the metal and therein generates a thin capillary of ionised metal vapour that, by almost completely absorbing the laser beam power, enables fusion of the metal so that welding is accomplished.

The above mentioned known art has some important drawbacks.

A first drawback lies in the fact that although the weld beads obtained with laser welding are of better quality than those obtained with other welding methods, they still have defects that can lead to breakages or other similar problems.

Said reduced penetration may lead to inadequate joining of the edges of the parts being welded and thus to the creation of a weld that cannot guarantee a high joining force between the parts.

Another defect, due to the incorrect formation of the metal vapour, consists of the fact that the weld bead often contains air bubbles which reduce the quality of said weld.

A further problem is that if welding is not performed correctly, cracks or other defects can occur which weaken the weld bead.

Another problem, which is no less important, lies in the complexity of adjusting the speed at which the laser beam moves, the intensity of the laser beam and the other operating parameters of a laser welding device.

These problems are particularly important when welding thin sheets, which cannot easily be welded using laser welding technology.

In this situation the technical purpose of the present invention is to develop a device and process for laser welding able to substantially overcome the inconveniences mentioned above.

Within the sphere of said technical purpose one important aim of the invention is to create a device and process for laser welding that can be used to obtain particularly high-quality weld beads, even with extremely thin metal sheets.

In detail, an important aim of the invention is to conceive a device and a process for laser welding that are able to produce weld beads almost devoid of faults.

Another aim of the invention is to obtain a process for laser welding that can be easily used and adjusted.

The technical task mentioned and the aims specified are achieved by a process of laser welding as claimed in the appended independent claim 1.

Preferred embodiments are highlighted in the sub-claims.

The features and advantages of the invention are hereinafter clarified by the detailed description of a preferred embodiment of the invention, with reference to the accompanying drawings, in which:

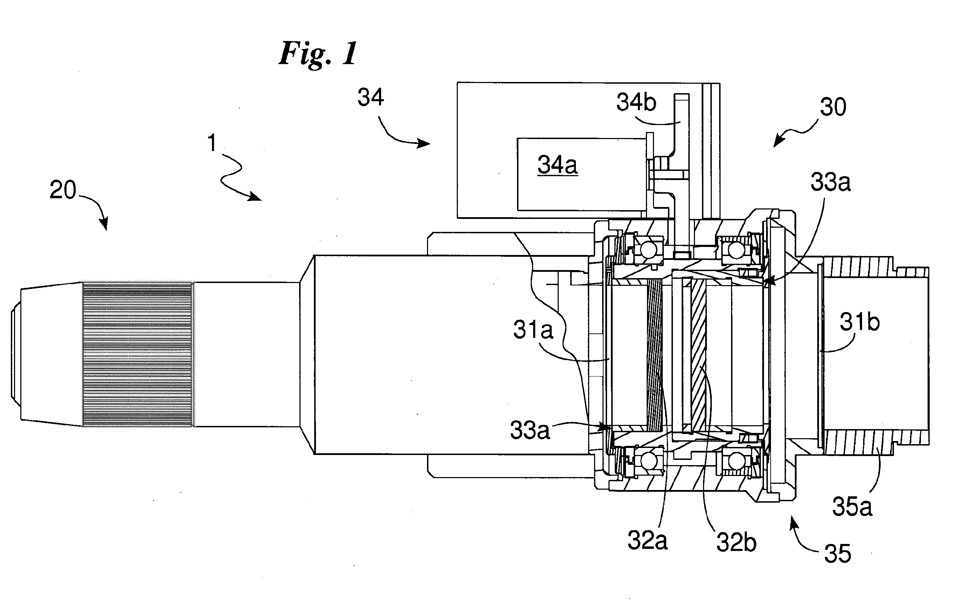

**Fig. 1** shows a section of the device for laser welding;

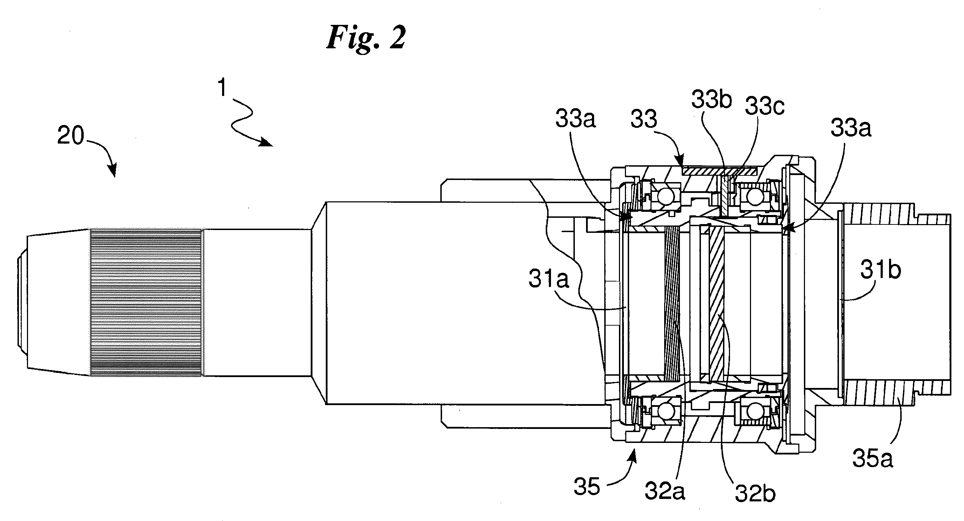

**Fig. 2** is a section of the device for laser welding taken along a sectional plane perpendicular to the plane in Fig. 1; and
**Figs. 3a-3d** highlight some possible arrangements of a portion of the welding device.

With reference to the drawings, the device for laser welding is generally identified by reference numeral **1**.

It is adapted to be used for joining a plurality of pieces, usually of metal, with each other, by use of a laser beam **10**. Device 1 is suitable to be used for automation of production processes such as those concerning the car industry, for example. To this aim, it is adapted to be disposed on an actuating system, such as a mechanical arm, a robot or other similar system capable of moving device 1 so as to shift the laser beam 10 in such a manner that weld beads of suitable length can be obtained.

The laser welding device 1 mainly comprises an emitter unit **20** adapted to emit the laser beam 10 that is emitted along a first optical axis **10a** and a calibration unit **30** passed through by the laser beam 10 and adapted to guide and calibrate said laser beam 10 enabling it to carry out the welding operation.

The emitter unit 20 consists of any source that, suitably stimulated, emits a laser beam 10, i.e. a monochromatic light beam with the typical divergence of the optical fibre or of the laser type, subsequently collimated and propagating along the first optical axis 10. Preferably, the emitter unit 20 is a fibre laser such as IPG's fibre laser and, more preferably, the laser beam emitted by unit 20 has a wavelength substantially included between 1030 and 1070 nm.

Once the laser beam 10 has come out of the emitter unit 20, it encounters along the first optical axis 10a, the calibration unit 30 determining orientation and size of the spot, i.e. the surface on which the beam 10 strikes carrying out the welding operation.

The calibration unit 30 comprises collimation and focusing lenses adapted to determine the spot section, refraction means adapted to be passed through by the laser beam 10 and to deviate the laser beam 10 along a second optical axis **10b** different from the first optical axis 10a, a guide structure **33** engaging the refraction means and adapted to enable the same means to carry out at least one first movement in which the mutual arrangement of the optical axes 10a and 10b is maintained constant, and actuating members **34** adapted to move the refraction means. The calibration unit 30 further has a holding structure **35** defining a volume in which at least the collimation and focusing lenses and the refraction means are disposed and provided with a cover **35a** adapted to enable easy access to said inner volume.

The collimation and focusing lenses are preferably two in number and, more preferably, comprise a collimation lens **31a** adapted to carry out collimation of the laser beam 10, and a focusing lens **31b** adapted to focus the laser beam 10 enabling welding to be carried out. Said two lenses 31 a and 31b are placed in such a manner that the refraction means is interposed between said lenses so that the laser beam 10 first passes through the collimation lens 31 a, then the refraction means and finally the other lens, i.e. the focusing leans 31 b.

The refraction means is made of a material adapted to be passed through by the laser beam 10 and having such a refraction index that the laser beam 10 is deviated along the second optical axis 10b. In particular, said means is of optical glass, i.e. a glass characterised by a chemical composition capable of ensuring a high degree of isotropy and, in particular, the same refraction index along the whole structure.

In detail, the refraction means comprises at least one solid of refraction substantially defining optical prisms, which solid, when the laser beam 10 passes through it, is able to deviate the laser beam 10 along a second optical axis 10b different from the first one 10a. In particular, the means comprises an optical prism, i.e. a block that, according to the first optical axis 10a, is bounded by two flat base faces defining the inlet surface and outlet surface of the laser beam 10.

According to the present invention, along the second optical axis 10b and appropriately also along the first optical axis 10a, the laser beam has a diameter of between 30 µm and 500 µm. It also has a power preferably of between 10 kW and 30 kW.

The refraction means comprises two optical prisms that are preferably substantially identical so as to define a first optical prism, i.e. a first refraction means **32a**, and a second optical prism, i.e. a second refraction means **32b**.

The optical prisms and therefore the refraction means have the adjoining faces, i.e. the base surfaces and in particular the outlet surface of the first prism 32a and the inlet surface of the second prism 32b, substantially parallel to each other and preferably substantially perpendicular to the first optical axis 10a. In addition, the optical prisms have the outer bases, i.e. the inlet surface of the first prism 32a and the outlet surface of the second prism 32b suitably inclined to each other. In detail, they have these outer bases inclined to said adjoining bases and in greater detail, inclined to the adjoining bases according to substantially equal inclination angles. In particular, this inclination angle is substantially smaller than 2°, preferably smaller than 1 and more preferably equal to 0°16'33" ± 0°0'30".

Therefore, the refraction means 32a and 32b can consist of right cylinders of oblique section in which the axes are substantially coincident with the first optical axis 10a, the bases constitute the adjoining surfaces parallel to each other, and the oblique sections identify the outer bases that are inclined to the bases by said inclination angle.

At the refraction means 32a and 32b the calibration unit 30 has the guide structure 33 engaging the refraction means 32a and 32b so as to enable the means 32a and 32b themselves to carry out at least one first movement in which the mutual arrangement of the optical axes 10a, 10b is maintained constant.

In detail, the guide structure 33 allows the refraction means 32a and 32b to carry out at least one first movement, in which the mutual arrangement of the optical axes 10a, 10b is maintained constant, and a second movement in which the mutual arrangement of the optical axes 10a, 10b is varied. In greater detail, the guide structure 33 allows the actuating members 34 both to move the refraction means 32a and 32b jointly when the laser welding device 1 is carrying out the welding operation, and to mutually move them when device 1 is carrying out no welding operation.

In particular, when welding is being carried out, the guide structure 33 allows the actuating members 34 to move both the refraction means 32a and 32b without varying the mutual arrangement of the optical axes 10a and 10b, i.e. leaving the inclination and distance between the two axes 10a and 10b substantially unchanged. Preferably, during execution of the welding operation, the actuating members 34, as better described in the following, rotate the refraction means 32a and 32b jointly about a rotation axis substantially parallel to the first optical axis 10a and, more preferably, about an axis substantially coincident with the first optical axis 10a. Said first movement is, according to the present invention, performed at a speed of rotation of between 200 Hz and 300 Hz.

Alternatively, when no welding is being executed, the guide structure 33 allows the actuating members 34 to vary the mutual arrangement of the optical axes 10a and 10b mutually moving the refraction means 32a and 32b and preferably moving one alone of the means 32a and 32b leaving the other substantially stationary.

In particular, when no welding is being executed, the actuating members 34 rotate one of the refraction means 32a and 32b substantially about the first optical axis 10a so as to vary the mutual inclination of the oblique sections of the means 32a and 32b and therefore the inclination of the second optical axis 10b relative to the first optical axis 10a.

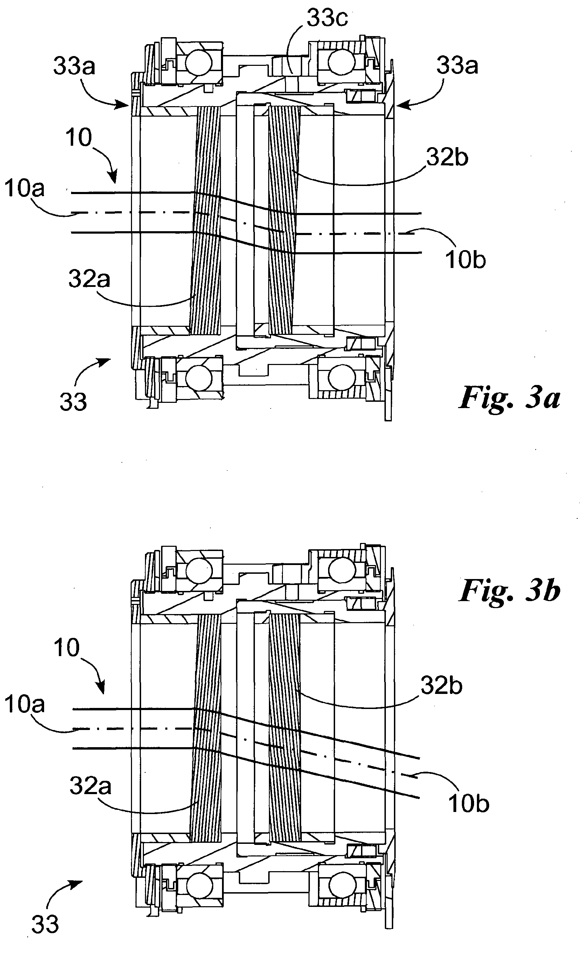

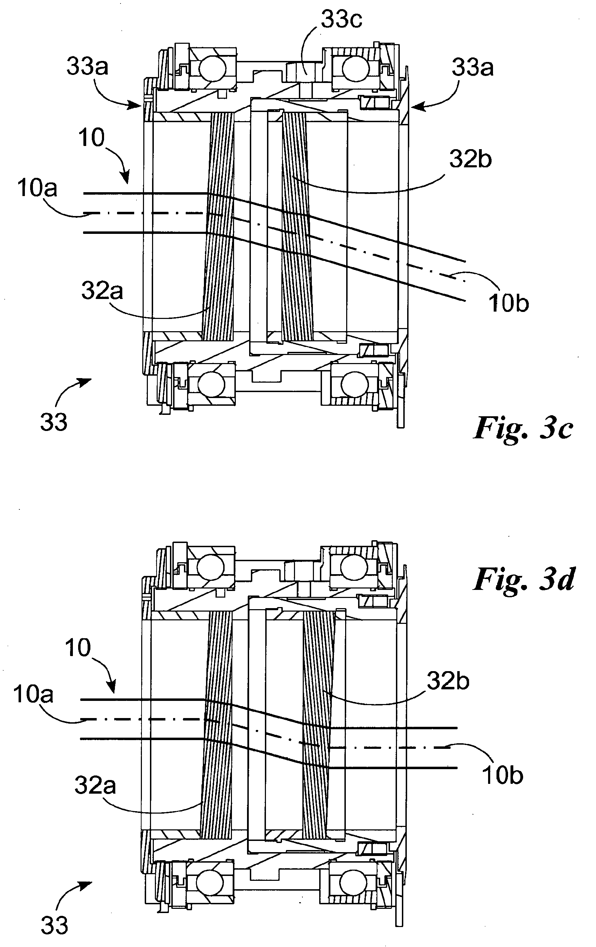

In Figs. 3a-3c some diagrams of possible inclinations of the second optical axis 10b relative to the first optical axis 10a are reproduced. In detail, in Fig. 3a the oblique sections of the refraction means 32a and 32b are substantially parallel, making the two optical axes lie on two distinct straight lines parallel to each other. On the contrary, in Figs. 3b and 3c the oblique sections of the means 32a and 32b are mutually rotated through 90° and 180° respectively, relative to the figure, so that the second optical axis 10b forms two distinct inclination angles with the first optical axis 10a.

Alternatively, the actuating members 34 translate one alone of the refraction means 32a and 32b, preferably along the first axis 10a, so as to vary the distance between the refraction means 32a and 32b and therefore the distance between the optical axes 10a and 10b. In particular, this translation enables the distance between the first axis 10a and the release point to be modified, said release point being the point of the oblique section from which the laser beam 10 emerges from the second optical prism 32b, leaving the mutual inclination of the oblique sections and therefore the inclination between the two optical axes 10a and 10b substantially unchanged.

An example of this translation is shown in Figs. 3a and 3d and from a comparison of same it is possible to note that a variation in the distance between the refraction means modifies the distance between the first axis 10a and the release point, i.e. the point at which the laser beam 10 leaves the oblique section of the second optical prism.

In a further alternative example, members 34 move one of the refraction means 32a and 32b causing a rotational-translational movement of this one relative to the other, preferably along the first optical axis 10a, so as to vary both the mutual inclination between the axes 10a and 10b and the distance between the first axis 10a and said release point.

In order to enable the above described particular movement of the refraction means 32a and 32b, members 34 comprise an actuating apparatus adapted to move at least one of the refraction means 32a and 32b and a connection mechanism adapted to make the means 32a and 32b either rigidly fastened to each other or connected in a motion-admitting manner, so as to move them jointly or relative to each other.

The guide structure 33 comprises two movable bodies **33a** each of which is rigidly connected to one of the refraction means 32a and 32b, and a fastening block **33b** adapted to create a constraint between the movable bodies 33a enabling the refraction means 32a and 32b to be moved jointly or, alternatively, adapted to release such a constraint so that the movable bodies 33a and therefore the means 32a and 32b can be moved mutually.

The movable bodies 33a consist of two cylinders having axes substantially coincident with each other and, more specifically, substantially coincident with the first optical axis 10a. Said cylinders are partly superposed and the more external one, preferably corresponding to the first optical prism 32a has a through hole **33c** through which the fastening block 33b abuts against the other movable body 33a so that the refraction means 32a and 32b are rigidly mutually connected.

Members 34, mechanically connected to at least one of the movable bodies 33a, have the actuating apparatus that, through said mechanism, moves at least one movable body 33a and, therefore, at least one of the means 32a and 32b.

The actuating apparatus comprises at least one motor **34a**, preferably of the electric type, which moves at least one of the movable bodies 33a through a motion-transmitting mechanism **34b** such as a toothed wheel, a belt or other similar element for example, that is suitable for engagement with this movable body 33a and for performing said motion-transmitting function. In particular, if the fastening block 33b creates the constraint between the movable bodies 33a, i.e. if the apparatus allows said first movement, motor 34a moves the refraction means 32a and 32b jointly, while, if the fastening block 33b does not create the constraint between the movable bodies 33a, i.e. if the apparatus enables said second movement, the motor 34a is able to only move the first one of the refraction means 32a leaving the second 32b substantially stationary.

Finally, the mutual movement of the refraction means 32a and 32b preferably takes place leaving the first means 32a kinematically connected to the motor 34a and moving the second of the refraction means 32b, more preferably manually moving the second of the refraction means 32b.

To ensure high accuracy during this manual movement, a ring nut or other operating element can be provided, so as to be easily accessible from the outside of the machine, for enabling accurate movement of the second of the refraction means 32b, and a graduated scale or similar solution capable of quantifying the movement of the second of the refraction means 32b relative to the first 32a.

The invention see claim 1 in particular comprises a new process for laser welding which is performed using the device 1 and according to the parameters described above.

First the process contemplates an installation step in which the laser welding device 1 is fastened to an actuating system, such as a mechanical arm, a robot or other similar system moving device 1 while the welding is being carried out. At this point, a plurality of steps are provided that take place in a substantially simultaneous manner.

In detail, the process comprises an adjusting step in which, using the second movement, arrangement of the second optical axis 10b relative to the first optical axis 10a is varied; an emission step in which the laser beam 10 is emitted which has the first optical axis 10a as the propagation direction; a refraction step in which the laser beam 10 is deviated along the second optical axis 10b; an actuating step using the first movement in which the laser beam 10 is rotated relative to a rotation axis substantially parallel to the first optical axis 10a, arrangement of the second optical axis 10b being maintained constant relative to the first optical axis 10a; and a welding step in which device 1, moved by the actuating system, makes the laser beam 10 strike on the pieces to be welded forming the weld bead.

In the adjusting step the refraction means 32a and 32b are mutually moved so as to deviate the laser beam 10 along the second optical axis 10b, i.e. in a propagation direction different from the first axis 10a. In this adjusting step, the operator acts on the guide structure 33 and, in particular, removes the fastening block 33b so as to release the constraint between the movable bodies 33a, and the cover 35a is moved away from the rest of structure 35 so that it is possible to manually act on the movable body 33a relating to the second of the refraction means 32b.

Now the operator acts on the movable body 33a thus actuating the refraction means 32a and 32b according to the second movement, i.e. moving the second of the refraction means 32b relative to the first of the refraction means 32a so as to vary the mutual position of the oblique sections and therefore the arrangement of the second optical axis 10b relative to the first optical axis 10a. Once the desired arrangement of the two optical axes 10a and 10b has been achieved, the operator puts the cover again on structure 32 and places the fastening block 33b back in the through hole 33c locking the movable bodies 34 and therefore the refraction means 32a and 32b in this position.

The calibration step is thus terminated and the emission step starts in which the laser beam 10 is emitted.

In this step, the laser beam 10 comes out of the emitter unit 20, propagates along the first optical axis 10a and finally passes through the collimation lens 31 a of the calibration unit 30.

At this point the refraction step begins in which, before the laser beam 10 passes through the focusing lens 31b the refraction means 32a and 32b deviate the laser beam 10 along the second optical axis 10b and, almost simultaneously, the actuating step begins in which the refraction means 32a and 32b, in accordance with the second movement, are rotated jointly around substantially the first optical axis 10a.

The combination of the refraction step and the actuation step and therefore the combined refraction of the refraction means 32a and 32b and rotation of the refraction means 32a and 32b themselves, defines a spot having a circular motion concentric with the first optical axis 10a.

In addition, almost simultaneous with said refraction and actuation steps, in the welding process the welding step is carried out in which the actuating system moves the second optical axis of the laser welding device 1 so that the spot hits the pieces to be welded along the whole region in which formation of the helicoidal weld bead is provided.

The speed at which the welding device 1 moves, which substantially determines the speed of execution of the weld bead, is, according to the present invention, preferably between 0.5 m/min and 10 m/min and more preferably between 7 m/min and 10 m/m.

In conclusion, during execution of a welding operation, the spot at the region in which the weld bead is provided carries out a helical motion due to the synergistic effect of the three refraction, actuation and welding steps. In fact, almost simultaneously, the laser beam 10 is deviated along a second optical axis 10b by the refraction means 32a and 32b, set in rotation by the actuating means 34 relative to the first optical axis 10a and, finally translated along the whole weld bead.

The diameter of the helicoid, and thus the diameter of the weld bead, is according to the present invention, between 1 mm and 4 mm, whereas the diameter of the weld spot is that of said laser beam, i.e. preferably between 30 µm and 1.5 mm and more preferably between 30 µm and 500 µm.

The invention enables important advantages to be achieved.

A first important advantage is represented by the high quality of the weld bead obtained by means of the above described laser welding device and process.

In particular, the applicant has discovered that laser welding of thin sheets requires a low specific power, that is a low ratio between total laser power and diameter of the laser beam, to prevent complete fusion and undesired cutting of the sheet.

The low specific power results in the need to use relatively very large laser beam diameters which may heat the surrounding areas too much, damaging these and making welding impossible.

On the contrary, a diameter that is too small would result in rapid heat dissipation, a weld bead that is too small and subsequent inadequacy of the weld.

On the other hand, with the laser welding device 1 it is possible to maintain a small laser beam diameter, heating of the sheet or object to be welded without the heat being entirely dissipated as many points of the helicoidal weld bead are close together and a weld bead with a large diameter because it corresponds to the diameter of the helicoid.

Said advantages are obtained with the parameters indicated, in particular it is essential that the speed of rotation be within the range specified above. Other important parameters in order to achieve said advantages are the feed speed, the width of the laser beam and of the bead and the total power of the laser.

Said parameters make it possible to weld sheets of thicknesses up to 0.1 mm.

This advantage is mainly due to the fact that the laser beam 10, when it hits the pieces to be welded, transfers less power to the pieces and therefore prevents the metal vapour from coming out of the capillary enabling perfect power absorption by the pieces to be welded and therefore optimising penetration of the weld.

Another important advantage is represented by the fact that, due to the correct formation of the metal vapour, formation of gas inclusions that would lower the quality of the weld bead is prevented.

These advantages are due to the particular movement of the spot and therefore the particular movements of the laser beam 10 coming out of the calibration unit 30.

In fact, the combined effect of the refraction means 32a and 32b, rotation of the refraction means 32a and 32b themselves and movement of device 1 determines a higher velocity of the spot that, stopping less on the points of the weld bead, ensures an optimal energy absorption by said pieces.

Another important advantage, due to the innovative first movement, is represented by the fact that focusing of the spot at the welding region is almost constant for the whole welding duration. This advantage is obtained by the fact that the position of the second optical axis 10b relative to the first optical axis 10a is constant and therefore the space travelled over by the laser beam before it reaches the welding region remains substantially constant during execution of the whole weld bead.

A further advantages is the high flexibility of the welding device 1 that, without the emitter unit 20 requiring to be modified, can be easily adapted to a high variety of pieces.

In fact, by modifying the mutual position of the refraction means 32a and 32b, the spot distance from the first optical axis 10a can be varied and therefore it is possible to vary the shifting velocity of the spot. In detail, the possibility of modifying the spot velocity enables the amount of energy absorbed by each point of the piece to be varied so as to adapt it to the requirements of the different pieces having different thickness and/or different manufacturing materials.

The invention is susceptible of variations falling within the inventive idea.

In particular, the actuating means 34 can comprise two motors preferably of the electric type and at least one control card adapted to control operation of the motors. In this case, the guide structure 33 can consist of kinematic mechanisms that, by individually connecting the refraction means 32a and 32b to the motors, make the motors operate the means 32a and 32b independently of each other. In this case, when welding is being carried out, the two motors rotate, through structure 34, the refraction means 32a and 32b around the first optical axis 10a at substantially identical velocities so that the refraction means 32a and 32b move jointly and therefore arrangement of the second optical axis 10b relative to the first optical axis 10a is not changed.

On the contrary, during the period in which no welding operation is carried out, the control card controls the two motors that, consequently, are driven at different velocities in such a manner that there is a mutual motion between the refraction means and therefore the arrangement of the second optical axis 10b relative to the first optical axis 10a is varied.

## Claims

1. A laser welding process comprising: an emission step in which a laser beam (10) having a diameter of between 30 µm and 500 µm is emitted and propagated along a first optical axis (10a); a refraction step in which said laser beam (10) is deviated by means of a first and a second optical prism (32a and 32b) along a second optical axis (10b) that is different to said first optical axis (10a); a movement step, performed simultaneously with said refraction step, in which said laser beam (10) is rotated in relation to an axis of rotation substantially parallel to said first optical axis (10a) maintaining the arrangement of said second optical axis (10b) constant with respect to said first optical axis (10a) by means of a jointly rotation of said optical prism (32a and 32b) around said first optical axis (10a), wherein in said movement step said second optical axis (10b) is moved in a feed direction so as to execute a helicoidal weld bead, said laser welding process being **characterised in that** said rotation is performed at a speed of between 200 Hz and 300 Hz, **in that** said laser beam (10) has a diameter of between 30 µm and 500 µm, **in that** said movement along said feed direction is performed at a speed of between 0.5 m/min and 10 m/min and **in that** said rotation defines a diameter of said helicoidal weld bead of between 1 mm and 4 mm.

2. A laser welding process as claimed in the preceding claim, comprising an adjusting step, which is performed before said emission step, in which said arrangement of said second optical axis (10b) is changed with respect to said first optical axis (10a).

3. A laser welding process as claimed in the preceding claim, wherein in said adjusting step the inclination of said second optical axis (10b) is changed with respect to said first optical axis (10a).

4. A laser welding process as claimed in one or more of the preceding claims, wherein said laser beam (10) has a power of between 10 kW and 30 kW.

5. A laser welding process as claimed in the preceding claim, wherein said movement along said feed direction is performed at a speed of between 0.7 m/min and 10 m/min.

6. A laser welding process as claimed in one or more of the preceding claims, wherein said refraction is obtained by refraction means (32a, 32b) comprising two solids of refraction substantially defining optical prisms suitable to be sequentially passed through by said laser beam (10).

## Patentansprüche

1. Verfahren zum Laserschweißen, das Folgendes umfasst: eine Emissionsphase, in der ein Laserstrahl (10) mit einem Durchmesser zwischen 30 µm und 500 µm abgeben wird, der entlang einer ersten optischen Achse (10a) verläuft; eine Brechungsphase, in der der genannte Laserstrahl (10) mittels eines ersten und zweiten optischen Prismas (32a und 32b) entlang einer zweiten, von der genannten ersten optischen Achse (10a) verschiedenen optischen Achse (10b) abgeleitet wird; eine Bewegungsphase zeitgleich mit der genannten Brechungsphase, in der der genannte Laserstrahl (10) im Verhältnis zu einer im Wesentlichen zu der genannten ersten optischen Achse (10a) parallelen Drehachse gedreht ist und so die Anordnung der genannten zweiten optischen Achse (10b) im Verhältnis zu der genannten ersten optischen Achse (10a) mittels einer gemeinsamen Drehung um die genannte erste optische Achse (10a) konstant hält, bei der in der genannten Bewegungsphase die genannte optische Achse (10b) entlang einer Vorschubrichtung bewegt wird, um eine schneckenförmige Schweißnaht auszuführen, wobei dieses Verfahren zum Laserschweißen **dadurch gekennzeichnet ist, dass** die genannte Drehung bei einer Geschwindigkeit zwischen 200 Hz und 300 Hz erfolgt und dadurch, dass der genannte Laserstrahl (10) einen Durchmesser zwischen 30 µm und 500 µm aufweist, dass die genannte Bewegung entlang der genannten Vorschubrichtung bei einer Geschwindigkeit von 0,5 m/min und 10 m/min erfolgt und dass die genannte Drehung einen Durchmesser der genannten schneckenförmigen Schweißnaht zwischen 1 mm und 4 mm definiert.

2. Verfahren zum Laserschweißen nach dem vorangegangenen Anspruch, das eine Phase der Einstellung vor der genannten Emissionsphase umfasst, in der die genannte Anordnung der genannten zweiten optischen Achse (10b) im Verhältnis zu der genannten ersten optischen Achse (10a) geändert wird.

3. Verfahren zum Laserschweißen nach dem vorangegangenen Anspruch, bei dem in der genannten Phase der Einstellung die Neigung der genannten zweiten optischen Achse (10b) im Verhältnis zu der genannten ersten optischen Achse (10a) geändert wird.

4. Verfahren zum Laserschweißen nach einem oder mehreren der vorangegangenen Ansprüche, bei dem der genannte Laserstrahl (10) eine Leistung zwischen 10 kW und 30 kW aufweist.

5. Verfahren zum Laserschweißen nach dem vorstehenden Anspruch, bei dem die genannte Bewegung entlang der genannten Vorschubrichtung bei einer Geschwindigkeit von 0,7 m/min und 10 m/min erfolgt.

6. Verfahren zum Laserschweißen nach einem oder mehreren der vorangegangenen Ansprüche, bei dem die genannte Brechung mittels Refraktierelementen (32a, 32b) erzielt wird, die zwei Refraktionsfeststoffe umfassen, die im Wesentlichen optische Prismen definieren, die geeignet sind, nacheinander von dem genannten Laserstrahl (10) überquert zu werden.

## Revendications

1. Procédé pour souder au laser comprenant: une phase d'émission dans laquelle il y a émission d'un faisceau laser (10) ayant un diamètre compris entre 30 µm et 500 µm et se propageant le long d'un premier axe optique (10a) ; une phase de réfraction dans laquelle ledit faisceau laser (10) est dévié au moyen d'un premier et d'un second prisme optique (32a et 32b) le long d'un deuxième axe optique (10b) différent dudit premier axe optique (10a) ; une phase de mouvement, simultanée à ladite phase de réfraction dans laquelle ledit faisceau laser (10) est tourné par rapport à un axe de rotation essentiellement parallèle audit premier axe optique (10a) en maintenant constante la disposition dudit deuxième axe optique (10b) par rapport audit premier axe optique (10a) au moyen d'une rotation solidaire autour dudit premier axe optique (10a), dans laquelle dans ladite phase de mouvement ledit deuxième axe optique (10b) est mis en mouvement le long d'une direction d'avance pour réaliser un cordon de soudure hélicoïdal ledit procédé pour souder au laser étant **caractérisé en ce que** ladite rotation est effectuée à une vitesse comprise entre 200 Hz et 300 Hz et **en ce que** ledit faisceau laser (10) a un diamètre compris entre 30 µm et 500 µm, **en ce que** ledit mouvement le long de ladite direction d'avance est effectuée à une vitesse de 0,5 m/min et 10 m/min et **en ce que** ladite rotation définit un diamètre dudit cordon de soudure hélicoïdal compris entre 1 mm et 4 mm.

2. Procédé pour souder au laser selon la revendication précédente, comprenant une phase de réglage précédent ladite phase d'émission, dans laquelle on varie ladite disposition dudit deuxième axe optique (10b) par rapport audit premier axe optique (10a).

3. Procédé pour souder au laser selon la revendication précédente, dans lequel dans ladite phase de réglage on varie l'inclinaison dudit deuxième axe optique (10b) par rapport au premier axe optique (10a).

4. Procédé pour souder au laser selon une ou plusieurs des revendications précédentes, dans lequel ledit faisceau laser (10) a une puissance comprise entre 10 kW et 30 kW.

5. Procédé pour souder au laser selon la revendication précédente, dans lequel ledit mouvement le long de ladite direction d'avance est effectué aux vitesses de 0,7 m/min et 10 m/min.

6. Procédé pour souder au laser selon une ou plusieurs des revendications précédentes, dans lequel ladite réfraction est obtenue au moyen d'éléments de réfraction (32a, 32b) comprenant deux solides de réfraction essentiellement définissant des prismes optiques aptes à être traversés en séquence par ledit faisceau laser (10).
